# EUROPÄISCHE PATENTSCHRIFT

(11) **EP 0 868 965 B1**
(45) Veröffentlichungstag und Bekanntmachung des Hinweises auf die Patenterteilung: **19.12.2001**
(21) Anmeldenummer: 98103700.5
(22) Anmeldetag: 03.03.1998
(51) Int. Cl.: B23Q 1/58, B23Q 16/00

(54) **Schlitten-Antriebsvorrichtung**
Carriage drive mechanisme
Dispositif d'entraînement d'un chariot

(30) Priorität: 05.04.1997 DE 29706098 U
(43) Veröffentlichungstag der Anmeldung: 07.10.1998
(73) Patentinhaber: Festo AG & Co, 73734 Esslingen (DE)
(72) Erfinder: Stoll, Kurt, Dr., 73732 Esslignen (DE); Mödinger, Uwe, 73249 Wernau (DE); Waldmann, Dieter, 73061 Ebersbach (DE)
(74) Vertreter: Abel, Martin, Dipl.-Ing.

(56) Entgegenhaltungen:
- EP-A- 0 683 010

## Beschreibung

Die Erfindung betrifft eine Schlitten-Antriebsvorrichtung, mit einem Grundgehäuse, in dem mindestens ein zu einer Linearbewegung antreibbares Betätigungselement angeordnet ist, mit einem außen am Grundgehäuse angeordneten, mit dem mindestens einen Betätigungselement bewegungsgekoppelten Schlitten, der mittels einer Führungseinrichtung relativ zum Grundgehäuse zwischen zwei Endpositionen linear bewegbar geführt ist, und mit zwei zwischen dem Grundgehäuse und dem Schlitten wirkenden Hubbegrenzungseinrichtungen zur variablen Vorgabe der beiden Endpositionen des Schlittens, die jeweils einen am einen Teil angeordneten, in Bewegungsrichtung des Schlittens einstellbaren Anschlag und einen diesem gegenüberliegend am anderen Teil angeordneten Gegenanschlag umfassen.

Eine Schlitten-Antriebsvorrichtung dieser Art geht beispielsweise aus der EP 0 683 010 A1 hervor. Ihr Grundgehäuse enthält ein oder mehrere, als Kolben ausgebildete Betätigungselemente, die über eine Kolbenstange mit einem außen am Grundgehäuse verschiebbar geführten Schlitten bewegungsgekoppelt sind. Der Schlitten ist ausgelegt, um mit einem zu bewegenden Bauteil gekoppelt zu werden, und kann durch Druckbeaufschlagung der Kolben zu einer hin und her gehenden Linearbewegung angetrieben werden. Zur Vorgabe der beiden Endpositionen des Schlittens sind zwei Hubbegrenzungseinrichtungen vorgesehen, die jeweils über einen einstellbaren Anschlag verfügen, der mit einem festen Gegenanschlag zusammenarbeitet. Die beiden einstellbaren Anschläge sind an den einander entgegengesetzten Endbereichen des Schlittens angeordnet, während ein gemeinsamer Gegenanschlag zwischen den Anschlägen sitzt und am Grundgehäuse festgelegt ist.

Als nachteilig bei der bekannten Anordnung ist anzusehen, daß zur Einstellung des die eingefahrene Endposition vorgebenden Anschlages im Arbeitsbereich der Schlitten-Antriebsvorrichtung manipuliert werden muß. Abgesehen von daraus resultierenden Gefahrensituationen sind damit auch Probleme der Handhabung verbunden, da zu bewegende Gegenstände in der Regel auf der Oberseite oder an der Stirnseite des Schlittens befestigt werden und dadurch die Zugänglichkeit des Anschlages beeinträchtigt werden kann.

Vergleichbare Unzulänglichkeiten ergeben sich auch bei der eine ähnliche Schlitten-Antriebsvorrichtung beschreibenden EP 0 603 459 A2.

Der Erfindung liegt daher die Aufgabe zugrunde eine Schlitten-Antriebsvorrichtung der eingangs genannten Art zu schaffen, bei der eine gefahrloser und handhabungsfreundlichere Einstellung der Endpositionen des Schlittens möglich ist.

Zur Lösung dieser Aufgabe ist vorgesehen, daß der eine einstellbar Anschlag am Schlitten und der andere einstellbare Anschlag am Grundkörper angeordnet ist, wobei beide einstellbare Anschläge an in die gleiche Axialrichtung weisenden Endbereichen des Schlittens bzw. des Grundgehäuses vorgesehen sind.

Auf diese Weise liegt eine Schlitten-Antriebsvorrichtung vor, bei der beide einstellbare Anschläge von einer gemeinsamen Axialseite her zugänglich sind, wobei es sich bei dieser Axialseite in der Regel um die Rückseite der Schlitten-Antriebsvorrichtung handeln wird. Im Vergleich zum Stand der Technik wird der eine einstellbare Anschlag am Grundkörper angeordnet und läßt sich daher an demjenigen Endbereich vorsehen, dem auch der am Schlitten angeordnete einstellbare Anschlag zugeordnet ist. Die Einstellungen für beide Endpositionen können damit sehr präzise von einer gemeinsamen Seite her vorgenommen werden.

Zwar beschreibt die EP 0 603 459 A2 auch bereits eine Ausführungsform, bei der die einstellbaren Anschläge in unmittelbarer Nachbarschaft zueinander angeordnet sind. Sie befinden sich jedoch weiterhin beide am beweglichen Schlitten und dabei im Bereich einer Längsseite des Grundgehäuses, so daß die Vornahme von Einstellungen weiterhin umständlich ist, zumal die für die Einstellungen notwendigen Manipulationen weiterhin von entgegengesetzten Seiten her an den Anschlägen vorzunehmen sind.

Vorteilhafte Weiterbildungen der Erfindung gehen aus den Unteransprüchen hervor.

Zweckmäßigerweise verfügt der Schlitten an seinem dem grundgehäusefest angeordneten einstellbaren Anschlag zugewandten Endbereich über eine stirnseitig offene Aussparung, in die der Anschlag eintauchen kann, wenn der Schlitten in die von ihm vorgegebene Endposition einfährt. Der Anschlag kann daher innerhalb des Umrisses des Grundgehäuses angeordnet werden und ragt nicht störend nach außen vor.

In entsprechender Weise kann der Schlitten auch für den an ihm selbst angeordneten einstellbaren Anschlag endseitig eine Aussparung aufweisen, in die der Anschlag insbesondere mit seiner zur Einstellung handzuhabenden Betätigungspartie hineinragen kann.

Es ist ferner von Vorteil, wenn die beiden Hubbegrenzungseinrichtungen seitlich beidseits der sich in Längsrichtung erstreckenden Führungseinrichtung angeordnet sind, wobei sie bei entsprechender Ausgestaltung der Schlitten-Antriebsvorrichtung im Bereich der beiden einander entgegengesetzten Längsseiten vorgesehen sein können.

Die einstellbaren Anschläge können von Anschlagkörpern gebildet sein, die ein Außengewinde aufweisen und in eine zugeordnete komplementäre Gewindebohrung eines am Schlitten bzw. am Grundkörper vorgesehenen Halteteils eingeschraubt sind. Durch Verdrehen des Anschlagkörpers kann hier eine Verstellbewegung in Bewegungsrichtung des Schlittens erzielt und dadurch die Einstellung der gewünschten Endposition vorgenommen werden. Eine Kontermutter kann zur sicheren Fixierung der eingestellten Endposition beitragen.

Die einstellbaren Anschläge können beispielsweise von einfachen Schrauben gebildet sein. Es kann sich bei dem Anschlagkörper aber auch um das Gehäuse eines fluidischen Stoßdämpfers handeln, der vorgesehen ist, um den Aufprall des Schlittens bei Erreichen der zugeordneten Endposition zu dämpfen. In diesem Falle können der einstellbare Anschlag und der ihm zugeordnete Stoßdämpfer als Baueinheit ausgeführt sein. Letzteres hat den Vorteil, daß der Dämpfungshub von der Einstellungen des Anschlages unabhängig ist und stets gleichbleibt.

Nachfolgend wird die Erfindung anhand der beiliegenden Zeichnung näher erläutert. In dieser zeigen:
- Figur 1: eine bevorzugte Bauform der Schlitten-Antriebsvorrichtung in perspektivischer Darstellung mit Blick auf die Rückseite,
- Figur 2: eine schematische Seitenansicht der Schlitten-Antriebsvorrichtung aus Figur 1 mit Blickrichtung gemäß Pfeil II, und
- Figur 3: einen Längsschnitt durch die Schlitten-Antriebsvorrichtung mit Blick von oben gemäß Schnittlinie III-III aus Figuren 1 und 2.

Die in der Zeichnung abgebildete Schlitten-Antriebsvorrichtung 1 umfaßt ein längliches Grundgehäuse 2 und einen daran in Längsrichtung gemäß Doppelpfeil 3 hin und her verschiebbar geführten Schlitten 4.

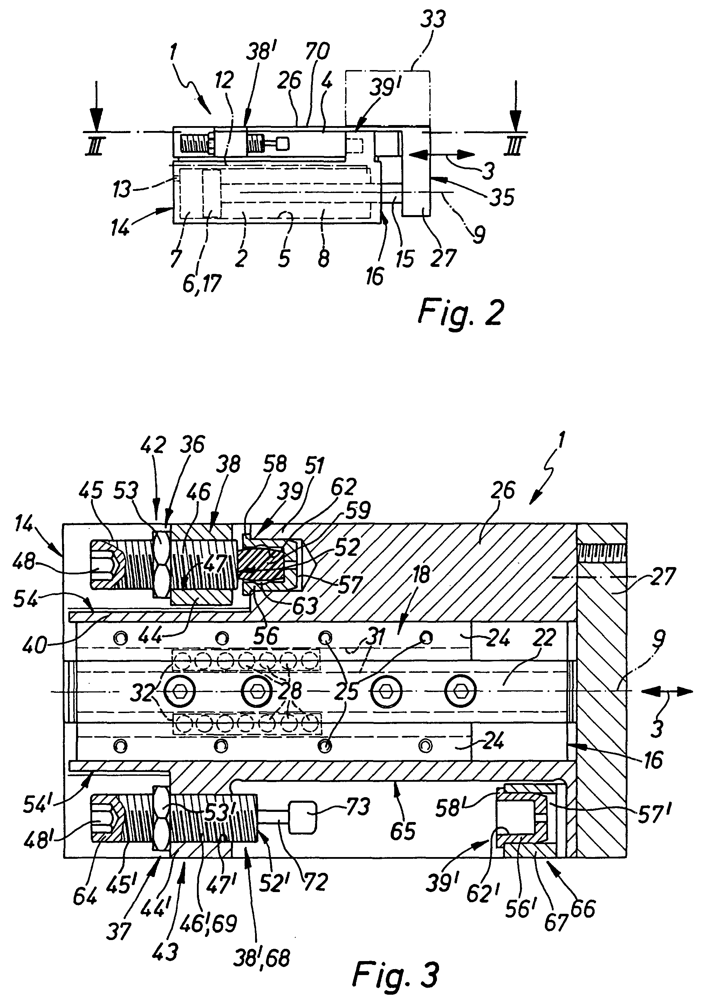

Das Grundgehäuse 2 verfügt im Innern über zwei mit Abstand nebeneinander angeordnete, sich in Längsrichtung 9 erstreckende Gehäusekammern 5, in denen jeweils ein axial beweglicher Kolben 6 angeordnet ist. Der Kolben 6 unterteilt die zugeordnete Gehäusekammer 5 unter Abdichtung in zwei Arbeitsräume 7, 8, die mit in Figur 2 schematisch angedeuteten Druckmittelkanälen 12, 13 kommunizieren, welche außen am Grundgehäuse 2 ausmünden. Bevorzugt sitzen die entsprechenden Mündungen an einer gemeinsamen Stirnseite des Grundgehäuses 2, beispielsgemäß an der rückwärtigen Stirnseite 14. Über an die Mündungen anschließbare Druckmittelleitungen ist ein fluidisches Druckmedium, insbesondere Druckluft, nach Bedarf zuführbar und abführbar, um den Kolben 6 zu einer Linearbewegung in die eine oder andere Richtung zu veranlassen. Da alle Druckmittelanschlüsse gemeinsam an der rückwärtigen Stirnseite 14 sitzen, ist das Anschließen der Druckmittelleitungen sehr einfach und es wird verhindert, daß sie im Betrieb mit dem sich bewegenden Schlitten 4 kollidieren.

An jedem Kolben 6 ist eine Kolbenstange 15 befestigt, die an der vorderen Stirnseite 16 aus dem Grundgehäuse 2 herausragt. In Figur 2 ist nur eine der Kolbenstangen 15 ersichtlich, die andere Kolbenstange wird verdeckt und liegt dahinter.

Die Kolbenstangen 15 sind außerhalb des Grundgehäuses 2 an dem Schlitten 4 befestigt. Auf diese Weise ist der Schlitten 4 mit den Betätigungselemente 17 bildenden Kolben 6 axial bewegungsgekoppelt. Die Verlagerung der Betätigungselemente 17 bewirkt eine gleichzeitige Verlagerung des Schlittens 4 in der schon erwähnten Verlagerungsrichtung 3.

Um den Schlitten 4 bei seiner Linearbewegung sicher zu führen und in Querrichtung abzustützen, ist zwischen ihn und das Grundgehäuse 2 eine Führungseinrichtung 18 zwischengeschaltet. Diese umfaßt beim Ausführungsbeispiel eine erste Führungsschiene 22, die an der Außenseite des Grundgehäuses 2 angeordnet ist und sich in dessen Längsrichtung 9 erstreckt. Die betreffende Außenseite sei nachfolgend als Oberseite 23 bezeichnet. Die Länge der ersten Führungsschiene 22 entspricht zweckmäßigerweise im wesentlichen derjenigen des Grundgehäuses 2.

Das Grundgehäuse 2 ist im Bereich der Oberseite 23 abgeflacht ausgeführt. Erreicht wird dies dadurch, daß das Grundgehäuse 2 im Querschnitt gesehen eine im wesentlichen rechteckähnliche Außenkontur besitzt. Die Ebene, in der die beiden Gehäusekammern 5 enthalten sind, verläuft dabei parallel zur Ausdehnungsebene der Oberseite 23. Die erste Führungsschiene 22 ist zweckmäßigerweise mittig bezogen auf die Breite der Oberseite 23 angeordnet, was auch aus Figur 3 gut ersichtlich ist.

Die Führungseinrichtung 18 verfügt desweiteren über zwei zweite Führungsschienen 24, die beidseits der ersten Führungsschiene 22 seitlich neben dieser angeordnet sind. Diese zweiten Führungsschienen 24 sind über Schrauben oder sonstige Befestigungsmittel 25 an der Unterseite eines plattenähnlichen ersten Schlittenabschnittes 26 festgelegt, der sich im Bereich der Oberseite 23 axial über das Grundgehäuse 2 erstreckt.

Der Schlitten 4 hat beim Ausführungsbeispiel insgesamt eine etwa L-förmige Gestalt, wobei einer der L-Schenkel von dem ersten Schlittenabschnitt 26 gebildet ist. Dieser erste Schlittenabschnitt 26 ragt über die vordere Stirnseite 16 des Grundgehäuses 2 hinaus, wobei sich dort ein nach unten vor die besagte vordere Stirnseite 16 ragender zweiter Schlittenabschnitt 27 anschließt, der den anderen L-Schenkel bildet. Die Kolbenstangen 15 sind an dem zweiten Schlittenabschnitt 27 festgelegt.

Die Führungseinrichtung 18 des Ausführungsbeispiels ist als Wälzführung ausgebildet. Sie kann wie abgebildet zwei Gruppen von jeweils einer Mehrzahl von beispielsweise kugelförmigen Wälzelementen 28 umfassen, die in einem Führungskäfig 32 gehalten und zwischen die erste Führungsschiene 22 und die beiden zweiten Führungsschienen 24 zwischengefügt sind. Die Führungsschienen 22, 24 weisen an den einander zugewandten Längsseiten längsverlaufende Führungsnuten 31 auf, die sich paarweise zu jeweils einem Führungskanal ergänzen, in dem sich die Wälzelemente 28 befinden. Wird der Schlitten 4 relativ zum Grundgehäuse 2 verlagert, laufen die Wälzelemente 23 an den Führungsnuten 32 ab und gewährleisten damit eine reibungsarme und überaus präzise Längsführung.

Es versteht sich, daß anstelle einer Wälzführung auch eine Gleitführung eingesetzt werden kann. Im übrigen könnte anstelle der gezeigten Mehrfachanordnung von Kolben und Kolbenstange auch eine Einfachanordnung vorgesehen sein. Auch könnte die Schlitten-Antriebsvorrichtung elektrisch betätigt sein, wobei es sich bei dem Betätigungselement 17 um ein mit einem Gewinde versehenes Teil handeln könnte, das an einer elektromotorisch angetriebenen Spindel entlangläuft.

Im Einsatz der Schlitten-Antriebsvorrichtung 1 ist an dem Schlitten 4 ein linear zu verfahrendes Bauteil angeordnet, das in Figur 2 strichpunktiert bei 33 angedeutet ist. Bei dem Bauteil 33 könnte es sich ohne weiteres um das Grundgehäuse 2 einer anderen Schlitten-Antriebsvorrichtung 1 handeln, die rechtwinklig ausgerichtet ist, so daß eine Mehrkoordinatenpositionierung durchgeführt werden kann. Ein derartiger Einsatz tritt insbesondere in der Handhabungstechnik auf. Das Bauteil 33 wird regelmäßig an der dem Grundgehäuse 2 abgewandten Oberseite 34 des ersten Schlittenabschnittes 26 oder an der der vorderen Stirnseite 16 abgewandten Vorderseite 35 des zweiten Schlittenabschnittes 27 festgelegt.

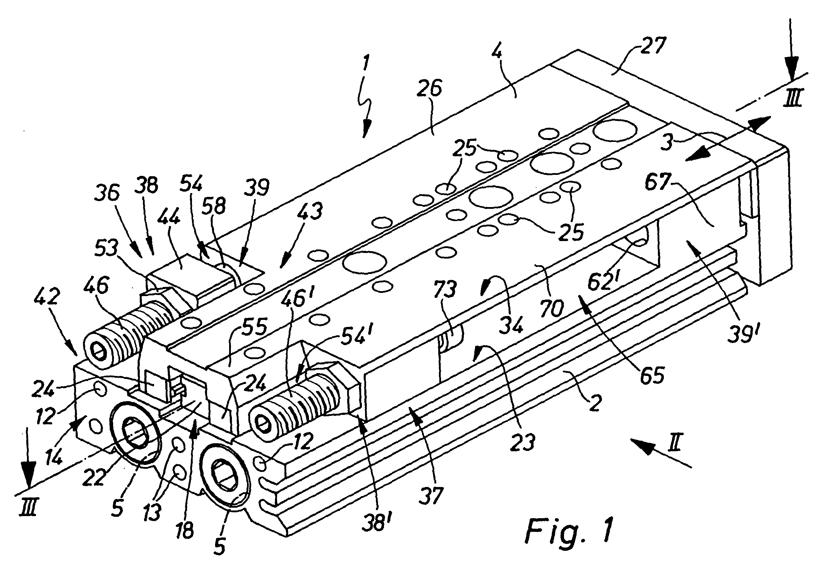

Die Schlitten-Antriebsvorrichtung 1 ist desweiteren mit zwei Hubbegrenzungseinrichtungen 36, 37 ausgestattet, durch die sich der Hub, also der Verfahrweg des Schlittens 4 relativ zum Grundgehäuse 2, begrenzen läßt, indem die beiden axialen Endpositionen des Schlittens 4 vorgegeben werden. Dabei stellt die in Figuren 1 und 3 gezeigte eine Endposition die eingefahrene Position des Schlittens 4 dar, in der er das Grundgehäuse 2 mit seinem ersten Schlittenabschnitt 26 weitestmöglich axial überlappt und die Oberseite 23 des Grundgehäuses 2 beispielsgemäß zumindest annähernd über die gesamte Länge abdeckt. Die Kolbenstangen 15 sind dabei in das Grundgehäuse 2 eingefahren. Wird Druckmedium zugeführt, fahren die Kolbenstangen 15 aus, wobei der Schlitten 4 unter Verringerung des Überlappungsgrades nach vorne verlagert wird, bis er die zweite Endposition erreicht, die als ausgefahrene Position bezeichnet werden soll.

Von den beiden Hubbegrenzungseinrichtungen 36, 37 ist die eine (36) zur Vorgabe der eingefahrenen Position und die andere (37) zur Vorgabe der ausgefahrenen Position vorgesehen. Beide Endpositionen sind unabhängig voneinander variabel einstellbar.

Die für die eingefahrene Position zuständige erste Hubbegrenzungseinrichtung 36 verfügt über einen am Grundgehäuse 2 angeordneten, in Verlagerungsrichtung 3 des Schlittens 4 axial einstellbaren Anschlag 38. Er sei als erster einstellbarer Anschlag 38 bezeichnet. Ihm liegt in Verlagerungsrichtung 3 zur Vorderseite hin ein am Schlitten 4 vorgesehener unverstellbarer erster Gegenanschlag 39 gegenüber.

Die für die ausgefahrene Position verantwortliche zweite Hubbegrenzungseinrichtung 37 verfügt über einen zweiten einstellbaren Anschlag 38', der am Schlitten 4 relativ zu diesem in Verlagerungsrichtung 3 verstellbar angeordnet ist. Ihm liegt in Verlagerungsrichtung 3 zur Vorderseite hin ein am Grundgehäuse 2 angeordneter zweiter Gegenanschlag 39' axial gegenüber.

Die beiden einstellbaren Anschläge 38, 38' befinden sich in vorteilhafter Weise an in die gleiche Axialrichtung weisenden Endbereichen 42, 43 des Grundgehäuses 2 bzw. des Schlittens 4. Beim Ausführungsbeispiel handelt es sich dabei um die entgegengesetzt zum zweiten Schlittenabschnitt 27 angeordneten rückwärtigen Endbereiche 42, 43 der betreffenden Teile. Die Anordnung kann so getroffen sein, daß die beiden einstellbaren Anschläge 38, 38' bei eingefahrener Position des Schlittens 4 gemeinsam dem Endbereich 42 des Grundgehäuses 2 zugeordnet sind und bezogen auf die Verlagerungsrichtung 3 im wesentlichen auf gleicher Höhe liegen. Die Anordnung gewährleistet eine einfache und übersichtliche Einstellung der gewünschten Endposition von der Rückseite der Schlitten-Antriebsvorrichtung 1 her und ohne Beeinträchtigung durch am Schlitten 4 festgelegte Bauteile 33.

Bevorzugt befinden sich die beiden Hubbegrenzungseinrichtungen 36, 37 seitlich beidseits der mittigen Führungseinrichtung 18, so daß eine gegenseitige Beeinträchtigung der Handhabung und Funktionsweise ausgeschlossen ist.

Nachfolgend werden die beiden Hubbegrenzungseinrichtungen 36, 37 näher beschrieben.

Die die eingefahrene Position des Schlittens 4 vorgebende erste Hubbegrenzungseinrichtung 36 umfaßt ein am rückwärtigen Endbereich 42 des Grundgehäuses 2 an dessen Oberseite 23 vorgesehenes, nach oben ragendes Halteteil 44. Dieses kann einstückiger Bestandteil des Grundgehäuses 2 sein. Es hat beim Ausführungsbeispiel eine klotzähnliche Gestalt. Es dient zur Halterung des ersten einstellbaren Anschlages 38, der beim Ausführungsbeispiel über einen mit einem Außengewinde 45 versehenen Anschlagkörper 46 verfügt, der in eine das Halteteil 44 in Längsrichtung 9 durchsetzende Gewindebohrung 47 eingeschraubt ist. Der Anschlagkörper 46 ist ein längliches Teil und verfügt an seiner nach hinten weisenden Rückseite über eine das Ansetzen eines Schraubwerkzeuges ermöglichende Werkzeugangriffspartie 48. Letztere ist beispielsgemäß als Innenmehrkant ausgeführt, jedoch könnte der Anschlagkörper 46 auch als einfache Schraube mit Kopf ausgebildet sein.

Der Anschlagkörper 46 durchsetzt die Gewindebohrung 47 und ragt an der Vorderseite des Halteteils 44 mit einer Anschlagpartie 52 heraus. Durch Verdrehen des Anschlagkörpers 46, was eine axiale Verlagerung zur Folge hat, läßt sich die Axialposition der Anschlagpartie 52 relativ zum Grundgehäuse 2 einstellen. Zur lösbaren Sicherung der Einstellung kann ein Sicherungselement 53 vorhanden sein, das beispielsgemäß von einer auf dem Außengewinde 45 sitzenden und gegen das Halteteil 44 verspannbaren Kontermutter gebildet ist.

Der Schlitten 4 verfügt an seinem rückwärtigen Endbereich 42 auf der Seite der ersten Hubbegrenzungseinrichtung 36 über eine stirnseitig zur Rückseite hin offene Aussparung 54. Ihre axiale Länge entspricht in etwa der Länge des Abstandes zwischen der der Anschlagpartie 52 zugeordneten Vorderseite des Halteteils 44 und der rückwärtigen Stirnseite 14 des Grundgehäuses 2. Auch seitlich ist die Aussparung 54 zweckmäßigerweise offen, so daß lediglich nach innen zur Führungseinrichtung 18 hin eine Wand 40 des Schlittens 4 verbleibt. Befindet sich der Schlitten 5 in der eingefahrenen Position gemäß Figuren 1 und 3 ist der erste einstellbare Anschlag 38 einschließlich des zugeordneten Halteteils 44 insbesondere vollständig in die Aussparung 54 eingetaucht. Die Anordnung hat den Vorteil, daß der der Führungseinrichtung 18 zugeordnete zentrale Bereich 55 des ersten Schlittenabschnittes 26, welcher die Aussparung 54 innen flankiert, eine von der Ausgestaltung der ersten Hubbegrenzungseinrichtung 36 unabhängige große Länge aufweisen kann, so daß auch bei weit ausgefahrenem Schlitten 4 noch ein sicherer, langer Führungskontakt zwischen den Führungsschienen 22, 24 vorliegt.

Der mit dem ersten einstellbaren Anschlag 38 zusammenwirkende Gegenanschlag 39 ist am zugewandten Endbereich 42 des Schlittens angeordnet und befindet sich an derjenigen Endpartie 51 des ersten Schlittenabschnittes 26, die die Aussparung 54 zur Vorderseite hin axial begrenzt. Er kann unmittelbar vom Schlitten 4 oder, wie beim Ausführungsbeispiel, von einem am Schlitten 4 angeordneten Gegenanschlagkörper 56 gebildet sein. Dieser Gegenanschlagkörper 56 ist beim Ausführungsbeispiel topfähnlich ausgebildet und in eine Axialvertiefung 57 des Schlittens 4 eingesetzt und insbesondere eingepreßt. Ein außerhalb der Axialvertiefung 57 liegender umlaufender Bund bildet eine Gegenanschlagpartie 58, die bei Erreichen der eingefahrenen Position auf die Anschlagpartie 52 aufläuft.

Um den Endaufprall zu mildern, kann zusätzlich ein Pufferelement 59 vorgesehen sein, dessen Wirkung vor Erreichen der zugeordneten Endposition eintritt. Es besteht beispielsweise aus Material mit gummielastischen Eigenschaften und kann in die zum Anschlagkörper 46 hin offene Vertiefung 62 des Gegenanschlagkörpers 56 derart eingesetzt sein, daß es normalerweise ein Stück weit über die Gegenanschlagpartie 58 zur Anschlagpartie 52 hin hinausragt. Auf diese Weise trifft das Pufferelement 59 vor der Gegenanschlagpartie 58 auf die Anschlagpartie 52 auf und wird anschließend elastisch verformt, bis der Kontakt zwischen Gegenanschlagpartie 58 und Anschlagpartie 52 vorliegt. Eine randseitige Querschnittserweiterung 63 in der Vertiefung 62 gewährleistet die Verformung des inkompressiblen Puffermaterials.

Der zweite einstellbare Anschlag 38' der auf der entgegengesetzten Längsseite angeordneten, zur Vorgabe der ausgefahrenen Position dienenden zweiten Hubbegrenzungseinrichtung 37 ist, was die Art der Befestigung und Einstellung anbelangt, vergleichbar dem ersten einstellbaren Anschlag 38 ausgebildet. Er ist an einem fest mit dem ersten Schlittenabschnitt 26 verbundenen Halteteil 44' angeordnet, das eine axial durchgehende Gewindebohrung 47' aufweist, durch die der zugeordnete Anschlagkörper 46' hindurchgeschraubt ist. Das Halteteil 44' ist zweckmäßigerweise einstückiger Bestandteil des Schlittens 4. Es befindet sich, bei eingefahrenem Schlitten 4 betrachtet, vorzugsweise ein Stück weit axial innerhalb der rückwärtigen Stirnseite 14 des Grundgehäuses 2 und begrenzt nach vorne hin eine zur rückwärtigen Stirnseite des Schlittens 4 hin offene Aussparung 54'. Die Aussparung 54' dient zur Aufnahme des rückwärtigen Endabschnittes 64 des Anschlagkörpers 46', der rückseitig über das Halteteil 44' hinausragt.

Auch die rückseitige Aussparung 54' ist seitlich, also sowohl nach seitwärts außen als auch nach oben hin, offen, so daß die mit der Werkzeugangriffspartie 48' versehene, vom Endabschnitt 64 gebildete Betätigungspartie des Anschlagkörpers wie auch das Sicherungselement 53, 53' leicht zugänglich ist.

Die Einstellung und Sicherung der Position des Anschlagkörpers 46' entspricht derjenigen des anderen Anschlagkörpers 46, so daß auf die diesbezügliche Beschreibung verwiesen werden kann. Zur besseren Unterscheidung sind allerdings die Bezugszeichen der entsprechenden Bestandteile mit einem zusätzlichen Strich markiert.

In dem dem zweiten einstellbaren Anschlag 38' vorgelagerten Bereich des ersten Schlittenabschnittes 26 ist eine weitere Aussparung 65 vorgesehen, in der der zugeordnete, unverstellbar fest mit dem Grundgehäuse 2 verbundene Gegenanschlag 39' angeordnet ist. Dieser befindet sich am vorderen Endbereich 66 des Grundgehäuses 2, um einen möglichst großen maximalen Hubweg zu gewährleisten. Er umfaßt ein insbesondere integral mit dem Grundgehäuse 2 ausgebildetes, in die weitere Aussparung 65 hineinragendes Halteteil 67, das mit einer beispielsgemäß durchgehenden Axialvertiefung 57' versehen ist, in der ein vergleichbar der obigen Beschreibung ausgebildeter Gegenanschlagkörper 56' einsitzt. Seine Gegenanschlagpartie 58' liegt im Hubweg der Anschlagpartie 52' und begrenzt dadurch den Ausfahrhub.

Die Aussparung 65 kann wie abgebildet an der Oberseite von einer Abdeckung 70 überdeckt sein, welche zweckmäßigerweise von einem Abschnitt des Schlittens 4 gebildet ist. Dadurch kann eine große und unzerklüftete Befestigungsfläche an der Oberseite 34 des ersten Schlittenabschnittes 26 zur Verfügung gestellt werden.

Die zweite Hubbegrenzungseinrichtung 37 zeichnet sich desweiteren dadurch aus, daß ihr zweiter einstellbarer Anschlag 38' in Baueinheit mit einem Stoßdämpfer 68 ausgebildet ist. Hierzu kann der zweite einstellbare Anschlag 38' und insbesondere dessen Anschlagkörper 46' vom zylindrischen Gehäuse 69 des Stoßdämpfers 68 gebildet sein. Es handelt sich vorzugsweise um einen fluidischen Stoßdämpfer, bei dem die Dämpfungswirkung auf der Verdrängung eines hydraulischen oder gasförmigen Mediums basiert. Derartige Stoßdämpfer sind als solches bekannt, so daß sich nähere Ausführungen zur Funktionsweise erübrigen. Jedenfalls erkennt man in Figur 3 eine an der Vorderseite des Gehäuses 69 austretende Stoßstange 72 mit am freien Ende vorgesehener Stoßpartie 73, die somit die Anschlagpartie 52' zum zweiten Gegenanschlag 39' hin überragen. Bei Annäherung an die ausgefahrene Endposition taucht die Stoßpartie 73 in die pufferlose Vertiefung 62' des Gegenanschlagkörpers 56' ein, bis sie an deren Grund anliegt, so daß bei der weiteren Hubbewegung die Stoßstange 72 in das Gehäuse 69 einfährt und dadurch den Dämpfungsvorgang bewirkt, der den Schlitten 4 wirksam abbremst. Der Dämpfungsvorgang ist beendet, wenn das Gehäuse 69 mit der stirnseitig an ihm vorgesehenen Anschlagpartie 52' auf die Gegenanschlagpartie 58' auftrifft.

Wird zum Zwecke der Veränderung der ausgefahrenen Endposition der zweite Anschlagkörper 46' verstellt, hat dies automatisch ein Verstellen des Stoßdämpfers 68 zur Folge, so daß der Dämpfungshub ungeachtet der jeweils eingestellten Endposition gleichbleibt und eine separate Justierung entfällt.

Die Anordnung könnte auch so getroffen werden, daß die Anschlagpartie 52' von der Stoßpartie 53 gebildet wird und die Endposition erreicht ist, wenn die Stoßstange 72 den vom Stoßdämpfer maximal zugelassenen Dämpfungsweg zurückgelegt hat.

Es bleibt zu erwähnen, daß selbstverständlich beide Hubbegrenzungseinrichtungen 36, 37 nach Wahl entweder mit oder ohne Stoßdämpfer 68 ausgestattet sein können. Eine Umrüstung ist jederzeit möglich, da lediglich ein Austausch von Anschlagkörper und Stoßdämpfer notwendig ist. Auch das Pufferelement 59 ist optional, wobei es im Zusammenhang mit einem Stoßdämpfer 68 wie abgebildet zweckmäßigerweise entfällt und selbst bei einer stoßdämpferlosen Hubbegrenzungseinrichtung im Falle nur geringer Hubgeschwindigkeiten entfallen kann.

## Patentansprüche

1. Schlitten-Antriebsvorrichtung, mit einem Grundgehäuse (2), in dem mindestens ein zu einer Linearbewegung antreibbares Betätgigungselement (17) angeordnet ist, mit einem außen am Grundgehäuse (2) angeordneten, mit dem mindestens einen Bet:ätigungselement (17) bewegungsgekoppelten Schlitten (4), der mittels einer Führungseinrichtung (18) relativ zum Grundgehäuse (2) zwischen zwei Endpositionen linear bewegbar geführt ist:, und mit zwei zwischen dem Grundgehäuse (2) und dem Schlitten (4) wirkenden Hubbegrenzungseinrichtungen (36, 37) zur variablen Vorgabe der beiden Endpositionen des Schlittens (4), die jeweils einen am einen Teil angeordneten, in Bewegungsrichtung (3) des Schlittens (4) einstellbaren Anschlag (38, 38') und einen diesem gegenüberliegend am anderen Teil angeordneten Gegenanschlag (39, 39') umfassen, **dadurch gekennzeichnet, daß** der eine einstellbare Anschlag (38') am Schlitten (4) und der andere einstellbare Anschlag (38) am Grundgehäuse (2) angeordnet ist, wobei beide einstellbare Anschläge (38, 38') an in die gleiche Axialrichtung weisenden Endbereichen (42, 43) des Schlittens (4) bzw. des Grundgehäuses (2) vorgesehen sind.

2. Schlitten-Antriebsvorrichtung nach Anspruch 1, **dadurch gekennzeichnet, daß** das mindestens eine Betätigungselement (17) als fluidbeaufschlagbarer Kolben (6) ausgebildet ist, der mit einer an der Vorderseite des Grundgehäuses (2) herausragenden und an dem Schlitten (4) festgelegten Kolbenstange (15) verbunden ist, wobei sich die einstellbaren Anschläge (38, 38') an den rückseitigen Endbereichen (42, 43) des Grundgehäuses (2) und des Schlittens (4) befinden.

3. Schlitten-Antriebsvorrichtung nach Anspruch 2, **gekennzeichnet durch** eine Zweifachanordnung von Kolben (6) und Kolbenstange (15), die beide mit dem Schlitten (4) verbunden sind.

4. Schlitten-Antriebsvorrichtung nach einem der Ansprüche 1 bis 3, **dadurch gekennzeichnet, daß** der Schlitten (4) eine L-förmige Gestalt hat, wobei der dem einen L-Schenkel entsprechende Schlittenabschnitt (26) das Grundgehäuse (2) axial überlappt und an diesem geführt ist, während der dem anderen L-Schenkel entsprechende Schlittenabschnitt (27) vor die eine Stirnseite (16) des Grundgehäuses (2) ragt und mit dem mindestens einen Betätigungselement (17) verbunden ist.

5. Schlitten-Antriebsvorrichtung nach einem der Ansprüche 1 bis 4, **dadurch gekennzeichnet, daß** der mit dem schlittenseitigen einstellbaren Anschlag (38') zusammenarbeitende Gegenanschlag (39') am axial entgegengesetzten Endbereich (66) des Grundgehäuses (2) und der mit dem grundgehäuseseitigen einstellbaren Anschlag (38) zusammenarbeitende Gegenanschlag (39) am zugewandten Endbereich (43) des Schlittens (4) angeordnet ist.

6. Schlitten-Antriebsvorrichtung nach einem der Ansprüche 1 bis 5, **dadurch gekennzeichnet, daß** der Schlitten (4) an seinem dem grundgehäuseseitigen einstellbaren Anschlag (38) zugewandten Endbereich (43) eine stirnseitig und vorzugsweise auch seitlich offene Aussparung (54) aufweist, in die der Anschlag (38) bei Erreichen der von ihm vorgegebenen Endposition des Schlittens (4) eintauchen kann.

7. Schlitten-Antriebsvorrichtung nach einem der Ansprüche 1 bis 6, **dadurch gekennzeichnet, daß** der Schlitten (4) an seinem den einstellbaren Anschlag (38') aufweisenden Endbereich (43) eine stirnseitig und vorzugsweise auch seitlich offene Aussparung (54') aufweist, die axial innen von einem den einstellbaren Anschlag (38') tragenden Halteteil (44') begrenzt ist, wobei der Anschlag (38') in die Aussparung (54') hineinragen kann.

8. Schlitten-Antriebsvorrichtung nach einem der Ansprüche 1 bis 7, **dadurch gekennzeichnet, daß** bei eingefahrenem Schlitten (4) betrachtet die beiden einstellbaren Anschläge (38, 38') bezogen auf die Bewegungsrichtung (3) des Schlittens (4) in etwa auf gleicher Höhe liegen.

9. Schlitten-Antriebsvorrichtung nach einem der Ansprüche 1 bis 8, **dadurch gekennzeichnet, daß** die beiden Hubbegrenzungseinrichtungen (36, 37) seitlich beidseits der Führungseinrichtung (18) angeordnet sind.

10. Schlitten-Antriebsvorrichtung nach einem der Ansprüche 1 bis 9, **dadurch gekennzeichnet, daß** der Schlitten (4) das Grundgehäuse (2) axial überlappt, wobei die Führungseinrichtung (18) mittig längs des Schlittens (4) und des Grundgehäuses (2) verläuft.

11. Schlitten-Antriebsvorrichtung nach einem der Ansprüche 1 bis 10, **dadurch gekennzeichnet, daß** die einstellbaren Anschläge (38, 38') von ein Außengewinde (45, 45') aufweisenden Anschlagkörpern (46, 46') gebildet sind, die in einer Gewindebohrung (47, 47') eines am Schlitten (4) bzw. am Grundgehäuse (2) vorgesehenen Halteteils (44, 44') verstellbar gehalten sind.

12. Schlitten-Antriebsvorrichtung nach einem der Ansprüche 1 bis 11, **dadurch gekennzeichnet, daß** wenigstens eine Hubbegrenzungseinrichtung (36, 37) zur Dämpfung des Aufpralles des Schlittens (4) bei Erreichen der vorgegebenen Endposition über einen fluidischen Stoßdämpfer (68) verfügt.

13. Schlitten-Antriebsvorrichtung nach Anspruch 12, **dadurch gekennzeichnet, daß** der einstellbare Anschlag (38, 38') und der diesem zugeordnete Stoßdämpfer (68) als Baueinheit ausgeführt sind.

14. Schlitten-Antriebsvorrichtung nach Anspruch 13, **dadurch gekennzeichnet, daß** der einstellbare Anschlag (38, 38') zumindest teilweise vom Gehäuse (69) des Stoßdämpfers (68) gebildet ist.

## Claims

1. Slide drive unit, with a base housing (2) in which is mounted at least one operating element (17) capable of being driven to perform a linear movement, with a slide (4) fitted externally to the base housing (2) and movement-coupled to the operating element or elements (17) and movably guided by means of a guide element (18) linearly between two end positions relative to the base housing (2), and with two stroke limiting devices (36, 37) acting between the base housing (2) and the slide (4) for variable presetting of the two end positions of the slide (4) and each comprising a stop (38, 38') adjustable in the direction of movement (3) of the slide (4) located on one section, and a counter-stop (39, 39') opposite the former and located on the other section, **characterized in that** one adjustable stop (38') is located on the slide (4) and the other adjustable stop (38) on the base housing (2), wherein both adjustable stops (38, 38') are provided on respective end sections (42, 43) of the slide (4) and of the base housing (2) which face in the same axial direction.

2. Slide drive unit according to claim 1, **characterized in that** the operating element or elements (17) is in the form of a fluid-actuable piston (6) which is connected to a piston rod (15) extending at the front side of the base housing (2) and fixed to the slide (4), wherein the adjustable stops (38, 38') are located on the rear side end sections (42, 43) of the base housing (2) and the slide (4).

3. Slide drive unit according to claim 2, **characterized by** a dual arrangement of piston (6) and piston rod (15), which are both connected to the slide (4).

4. Slide drive unit according to any of claims 1 to 3, **characterized in that** the slide (4) has an L shape wherein the slide section (26) corresponding to one L leg axially overlaps and is guided on the base housing (2), while the slide section (27) corresponding the other L leg extends from one end face (16) of the base housing (2) and is connected to the operating element or elements (17).

5. Slide drive unit according to arty of claims 1 to 4, **characterized in that** the counterstop (39') working in conjunction with the adjustable stop (38') on the slide side is located on the axially opposite end section (66) of the base housing (2), and the counter-stop (39) working in conjunction with the adjustable stop (38) on the base housing side is located on the facing end section (43) of the slide (4).

6. Slide drive unit according to any of claims 1 to 5, **characterized in that** the slide (4) has on its end section (43) facing the adjustable stop (38) on the base housing side an end face recess (54) preferably also open at the side, into which the stop (38) can dip on reaching the preset end position of the slide (4) set by it.

7. Slide drive unit according to any of claims 1 to 6, **characterized in that** the slide (4) has on its end section (43) facing the adjustable stop (38') an end face recess (54') preferably also open at the side and bounded on the axial inside by a holding part (44') carrying the adjustable stop (38'), wherein the stop (38') can extend into the recess (54').

8. Slide drive unit according to any of claims 1 to 7, **characterized in that**, viewed with the slide retracted, the two adjustable stops (38, 38') are at roughly the same height relative to the direction of movement (3) of the slide (4).

9. Slide drive unit according to any of claims 1 to 8, **characterized in that** the two stroke limiting devices (36, 37) are located either side of the guide element (18).

10. Slide drive unit according to any of claims 1 to 9, **characterized in that** the slide (4) axially overlaps the base housing (2), while the guide element (18) runs centrally along the slide (4) and the base housing (2).

11. Slide drive unit according to any of claims 1 to 10, **characterized in that** the adjustable stops (38, 38') are formed by stop elements (46, 46') with an external thread (45, 45'), adjustably mounted in a tapped hole of a holding part (44, 44') provided on the slide (4) and on the base housing (2) respectively.

12. Slide drive unit according to any of claims 1 to 11, **characterized in that** one or more of the stroke limiting devices (36, 37) has a fluidic shock absorber (68) to dampen the impact of the slide (4) on reaching the preset end position.

13. Slide drive unit according to claim 12, **characterized in that** the adjustable stop (38, 38') and the shock absorber (68) assigned to it are designed as a unit.

14. Slide drive unit according to claim 13, **characterized in that** the adjustable stop (38, 38') is formed at least partly by the housing (69) of the shock absorber (68).

## Revendications

1. Dispositif d'entraînement à chariot, comportant un boîtier de base (2) dans lequel est disposé au moins un élément d'actionnement (17) qui peut être entraîné en un mouvement linéaire, comportant un chariot (4) disposé à l'extérieur sur le boîtier de base (2) et accouplé en déplacement avec le ou les éléments d'actionnement (17), lequel chariot est guidé au moyen d'un dispositif de guidage (18), de manière à pouvoir être déplacé linéairement par rapport au boîtier de base (2), entre deux positions de fin de course, et comportant deux dispositifs de limitation de course (36, 37) qui agissent entre le boîtier de base (2) et le chariot (4), pour la sélection variable des deux positions de fin de course du chariot (4), qui comprennent chacun une butée (38, 38') disposée sur une partie réglable dans le sens de déplacement (3) du chariot (4), ainsi qu'une contre-butée (39, 39') disposée en face de la butée, sur l'autre partie, **caractérisé en ce qu'**une butée réglable (38') est disposée sur le chariot (4) et l'autre butée réglable (38) sur le boîtier de base (2), les deux butées réglables (38, 38') étant prévues dans les deux zones terminales (42, 43) respectivement du chariot (4) et du boîtier (2), dirigées dans le même sens axial.

2. Dispositif d'entraînement à chariot selon la revendication 1, **caractérisé en ce que** le ou les éléments d'actionnement (17) est ou sont réalisés en tant que piston (6) soumis à l'action d'un fluide, qui est relié à une tige de piston (15) sortant du côté avant du boîtier de base (2) et fixée au chariot (4), les butées réglables (38, 38') se trouvant dans les zones terminales (42, 43) arrière du boîtier de base (2) et du chariot (4).

3. Dispositif d'entraînement à chariot selon la revendication 2, **caractérisé par** une disposition double du piston (6) et de la tige de piston (15), qui sont reliés tous deux au chariot (4).

4. Dispositif d'entraînement à chariot selon l'une des revendications 1 à 3, **caractérisé en ce que** le chariot (4) présente une forme en L, la portion de chariot (26), correspondant à une branche du L, recouvrant axialement le boîtier de base (2) et étant guidée sur celui-ci, tandis que la portion de chariot (27) qui correspond à l'autre branche du L dépasse d'un côté frontal (16) du boîtier de base (2) et est reliée à un ou aux éléments d'actionnement (17).

5. Dispositif d'entraînement à chariot selon l'une des revendications 1 à 4, **caractérisé en ce que** la contre-butée (39'), qui coopère avec la butée réglable (38') côté chariot, est disposée dans la zone terminale (66) opposée axialement du boîtier de base (2), et **en ce que** la contre-butée (39), qui coopère avec la butée réglable (38) côté boîtier de base, est disposée dans la zone terminale (43), tournée vers celle-ci, du chariot (4).

6. Dispositif d'entraînement à chariot selon l'une des revendications 1 à 5, **caractérisé en ce que** dans sa zone terminale (43) tournée vers la butée réglable (38) du côté boîtier de base, le chariot (4) présente une découpe (54) ouverte frontalement et de préférence aussi latéralement, dans laquelle peut s'engager la butée (38) lorsque la position de fin de course du chariot (4), imposée par cette butée, est atteinte.

7. Dispositif d'entraînement à chariot selon l'une des revendications 1 à 6, **caractérisé en ce que** dans sa zone terminale (43), présentant la butée réglable (38'), le chariot (4) présente une découpe (54') ouverte frontalement et de préférence aussi latéralement, qui est limitée axialement à l'intérieur par une pièce de maintien (44') qui supporte la butée réglable (38'), la butée (38') pouvant s'engager dans la découpe (54').

8. Dispositif d'entraînement à chariot selon l'une des revendications 1 à 7, **caractérisé en ce que** dans le cas où le chariot (4) est rentré, les deux butées réglables (38, 38') se situent approximativement à même hauteur, par rapport au sens de déplacement (3) du chariot (4).

9. Dispositif d'entraînement à chariot selon l'une des revendications 1 à 8, **caractérisé en ce que** les deux dispositifs de limitation de course (36, 37) sont disposés des deux côtés du dispositif de guidage (18).

10. Dispositif d'entraînement à chariot selon l'une des revendications 1 à 9, **caractérisé en ce que** la chariot (4) recouvre axialement le boîtier de base (2), le dispositif de guidage (18) s'étendant au milieu le long du chariot (4) et du boîtier de base (2).

11. Dispositif d'entraînement à chariot selon l'une des revendications 1 à 10, **caractérisé en ce que** les butées réglables (38, 38') sont formées par des corps de butée (46, 46') qui présentent un filetage extérieur (45, 45') et qui sont maintenus en position réglable dans un trou taraudé (47, 47') d'une pièce de maintien (44, 44') prévue respectivement sur le chariot (4) et sur le boîtier de base (2).

12. Dispositif d'entraînement à chariot selon l'une des revendications 1 à 11, **caractérisé en ce que** pour l'amortissement du rebondissement du chariot (4), lorsqu'est atteinte la position de fin de course imposée, au moins un dispositif de limitation de course (36, 37) comporte un amortisseur fluidique (68).

13. Dispositif d'entraînement à chariot selon la revendication 12, **caractérisé en ce que** la butée réglable (38, 38') et l'amortisseur (68) associé à celle-ci sont réalisés en tant qu'ensemble.

14. Dispositif d'entraînement à chariot selon la revendication 13, **caractérisé en ce que** la butée réglable (38, 38') est formée au moins en partie par le boîtier (69) de l'amortisseur (68).
